# EUROPÄISCHE PATENTSCHRIFT

(11) **EP 3 099 526 B1**
(45) Veröffentlichungstag und Bekanntmachung des Hinweises auf die Patenterteilung: **04.05.2022**
(21) Anmeldenummer: 15700846.7
(22) Anmeldetag: 06.01.2015
(51) Int. Cl.: B60N 2/20, B60N 2/22, B60N 2/235

(54) **LEHNENVERSTELLER UND FAHRZEUGSITZ MIT EINEM LEHNENVERSTELLER**
RECLINER ADJUSTER AND A VEHICLE SEAT WITH A BACKREST ADJUSTER
DISPOSITIF D'AJUSTEMENT D'INCLINAISON ET UN SIEGE DE VEHICULE AVEC UN DISPOSITIF D'AJUSTEMENT D'INCLINAISON

(30) Priorität: 31.01.2014 DE 102014201812; 16.04.2014 DE 102014207363
(43) Veröffentlichungstag der Anmeldung: 07.12.2016
(73) Patentinhaber: Adient Luxembourg Holding S.à r.l., 1855 Luxembourg (LU)
(72) Erfinder: WETZIG, Stefan, 58256 Ennepetal (DE)
(74) Vertreter: Finger, Catrin
(86) Internationale Anmeldenummer: PCT/EP2015/050100
(87) Internationale Veröffentlichungsnummer: WO 2015/113784

(56) Entgegenhaltungen:
- DE-A1-102012 006 227
- DE-U1-202011 106 338

## Beschreibung

Die Erfindung betrifft einen Lehnenversteller zur Verstellung einer Sitzlehne eines Fahrzeugsitzes und einen Fahrzeugsitz mit einem solchen Lehnenversteller.

Ein derartiger Lehnenversteller ist mit Beschlägen zur manuellen oder elektrisch betriebenen Verstellung einer Sitzlehne eines Fahrzeugsitzes mit oder ohne Easy-Entry-System bekannt, welcher verschiedene Komfort- oder Gebrauchsstellungen der Sitzlehne bzw. einen erleichterten Einstieg in einen Fondbereich eines Fahrzeuges ermöglicht. Der Beschlag ist durch einen Bedienhebel, insbesondere einen Entriegelungshebel, welcher am Beschlag selbst oder an einer Rückenlehne des Fahrzeugsitzes angeordnet sein kann, betätigbar, wodurch die Rückenlehne des Fahrzeugsitzes entriegelt und in eine Komfortstellung bzw. aus einem Einstiegsbereich schwenkbar ist. Ist der Fahrzeugsitz auf Schienen angeordnet, kann der Fahrzeugsitz bei Betätigung des Entriegelungshebels zusätzlich aus dem Einstiegsbereich her in Fahrtrichtung verschiebbar sein.

Die DE 10 2010 025 112 A1 beschreibt einen Beschlag für einen Fahrzeugsitz, insbesondere einen Kraftfahrzeugsitz, mit einem ersten Beschlagteil und einem zweiten Beschlagteil, welche miteinander verriegelbar und relativ zueinander um eine Achse verdrehbar sind, einer Übertragungstange, deren Drehung den Beschlag entriegelt, und einem Handhebel, dessen Betätigung zum Entriegeln des Beschlags die Übertragungsstange dreht, wobei ein Anschlagmodul vorgesehen ist, welches in Wirkverbindung einerseits mit dem Handhebel und andererseits mit der Übertragungsstange steht und welches in wenigstens eine Drehrichtung den Handhebel und eines der Beschlagteile relativ zueinander in Anschlag bringt.

Aus der DE 100 28 119 A1 ist eine Sitzverstellvorrichtung für ein Fahrzeug, mit einem unteren Arm bekannt, der dafür vorgesehen ist, fest an einem Sitzkissenelement angeordnet zu werden, einem oberen Arm, der drehbar mit dem unteren Arm angeordnet und dafür vorgesehen ist, an einem Sitzlehnenelement befestigt zu werden, einem Sperrmechanismus für ein Sperren des oberen Arms relativ zu dem unteren Arm, wobei der Sperrmechanismus einen drehbaren Nocken und eine Feder hat, die zwischen dem unteren Arm und dem Nocken zum Aufbringen einer Vorspannkraft auf den Nocken angeordnet ist, wobei die Feder so angeordnet ist, dass sie sich um die Drehachse des Nocken windet.

Die DE 10 2012 010 402 B3 beschreibt einem Beschlag für einen Fahrzeugsitz mit einem ersten Beschlagteil und einem zweiten Beschlagteil, welche relativ zueinander um eine Achse verdrehbar sind, wobei am ersten Beschlagteil ein Zahnkranz und am zweiten Beschlagteil Führungssegmente ausgebildet sind und mit Riegeln, welche mittels der Führungssegmente geführt zwischen einem verriegelten Zustand und einem entriegelten Zustand radial verschieblich sind und im verriegelten Zustand mit dem Zahnkranz zusammenwirken, um den Beschlag zu verriegeln und mit einem federbelasteten, drehbar gelagerten Exzenter, welcher die Riegel beaufschlagt, um sie zum Zusammenwirken mit dem Zahnkranz zu bringen sowie mit einem drehbar gelagerten Mitnehmer zum Drehen des Exzenters und einem Indikator, der drehfest mit dem Mitnehmer verbunden ist, wobei ein mit dem Beschlag verbundener Sensor eine Positionsänderung des Indikators erfasst und diese in ein elektrisches Ausgangssignal umwandelt.

Aus DE 20 2011 106 338 U1 ist ein Beschlagsystem für einen Fahrzeugsitz, insbesondere einen Kraftfahrzeugsitz, bekannt, mit wenigstens einen Beschlag, welcher ein erstes Beschlagteil und ein zweites Beschlagteil aufweist, die miteinander verriegelbar und relativ zueinander um eine Achse verdrehbar sind, und einer Übertagungsstange und einen Handhebel. Zwischen dem Beschlag und dem Handhebel ist eine Rückstellfeder mit nichtlinearer Kennlinie angeordnet. Die Rückstellfeder wird von einem Anschlagmodul aufgenommen.

Ferner ist in DE 10 2012 006 227 A1 eine Betätigungseinheit für einen Fahrzeugsitz, insbesondere einen Kraftfahrzeugsitz, beschrieben. Das Beschlagsystem umfasst zwei Beschläge und eine Betätigungseinheit mit einer Übertragungsstange.

Aufgabe der vorliegenden Erfindung ist es, einen verbesserten Lehnenversteller mit einem Beschlag zur Verstellung einer Sitzlehne und einen Fahrzeugsitz mit einem verbesserten Lehnenversteller anzugeben. Die Aufgabe wird hinsichtlich des Lehnenverstellers erfindungsgemäß gelöst durch die im Patentanspruch 1 angegebenen Merkmale. Hinsichtlich des Fahrzeugsitzes wird die Aufgabe erfindungsgemäß gelöst durch die im Patentanspruch 9 angegebenen Merkmale.

Der Lehnenversteller weist ein Beschlagoberteil, ein Beschlagunterteil und einen zwischen diesen angeordneten Beschlag, insbesondere ein Dreh- und/oder Rastbeschlag zur Verstellung einer Sitzlehne auf, wobei das Beschlagoberteil an der Rückenlehne und das Beschlagunterteil an einem sitz- oder karosserieseitigen Unterbau befestigt sind. Dabei ist beidseitig an jeder Seite des Fahrzeugsitzes ein solcher Beschlag mit Beschlagober- und Beschlagunterteil angeordnet. Die beiden Beschläge sind mittels einer Übertragungsstange miteinander drehbar gekoppelt. Zur Rückstellung der Sitzlehne in ihre Ausgangslage, insbesondere in eine Sitz- oder Ausgangsposition, umfasst der Lehnenversteller mindestens eine Rückstellfeder, die insbesondere innenseitig am Beschlagoberteil angeordnet ist, wobei die Innenseite des Bedienhebels eine Durchgangsöffnung mit einer Ausformung aufweist, die eine Aussparung enthält, welche ein sternförmiges, zahnkranzförmiges oder thoraxförmiges Profil aufweist.

Der jeweilige als Dreh- und/oder Rastbeschlag ausgebildete Beschlag dient der Neigungsverstellung und/oder dem Freischwenken der Sitzlehne. Insbesondere kann der jeweilige Beschlag zur Positionierung der Sitzlehne in verschiedene Sitz- oder Komfortpositionen und/oder in eine Easy-Entry-Position, für eine integrierte Komfortverriegelung zur Positionierung der Sitzlehne in mindestens eine Komfort- oder Sitzposition eingerichtet sein.

Zumindest einer der Beschläge ist außenseitig, insbesondere auf der von der Übertragungsstange und dem zweiten Beschlag abgewandten Seite, über einen Adapter mit einem Bedienhebel drehfest verbunden. Der Adapter ist drehfest am Beschlag, insbesondere an einem Mitnehmer oder an einem Befestigungsring oder einer Scheibe des Beschlages, und drehfest am Bedienhebel angeordnet.

Hierzu weist der Adapter und der Bedienhebel zueinander korrespondierende, insbesondere ineinander greifende Profile oder Strukturen, insbesondere oberflächenseitig abstehende Rippen, Stege und/oder Zahnungen, auf. Der Adapter und der Beschlag sind mittels einer lösbaren Verbindung, insbesondere einer Schnapp- und/oder Rastverbindung drehfest miteinander gekoppelt. Zusätzlich sind der Adapter und die Übertragungsstange lösbar miteinander gekoppelt, insbesondere mittels einer Schnapp- und/oder Steck- und/oder Rastverbindung.

Zusätzlich zu den insbesondere axial abstehenden rippen-, zahn- und/oder stegförmigen Profilen/Strukturen zur drehfesten Kopplung von Adapter und Bedienhebel weist der Adapter zumindest ein oder zwei oder mehr als zwei radial abstehende Anschläge, beispielsweise in Form von kreissegmentartigen Fahnen oder Verlängerungen, auf, in den oder in die ein bzw. mehrere korrespondierende beschlagseitige Anschlagelemente, beispielsweise in Form von einer oder mehreren Laschen, des sitzteilfesten Beschlags eingreifen zur Begrenzung der Drehung des Adapters und damit der Drehung des Bedienhebels relativ zum Sitzteil.

Der Adapter ist mittels eines zugehörigen Rückstellelements, insbesondere unabhängig vom Verriegelungszustand des Beschlages, in eine Ausgangslage zurückstellbar. Somit steht der Beschlag über den Adapter mit dem Bedienhebel zur Ent- oder Verriegelung drehbar in Eingriff, wobei ein Schwenkbereich des Bedienhebels mittels einer in den Adapter eingreifenden Lasche des Beschlags und eines zu dieser Lasche korrespondierenden Anschlags des Adapters begrenzt ist.

Ein erfindungsgemäßer Lehnenversteller für einen Fahrzeugsitz umfasst zumindest ein Beschlagoberteil, ein Beschlagunterteil und ein dazwischen angeordneten Beschlag, wobei an einer vom Beschlag abgewandten Seite des Beschlagoberteils oder des Beschlagunterteils ein separater Adapter angeordnet ist, der durch eine Ausnehmung im Beschlagoberteil bzw. im Beschlagunterteil am Beschlag fixiert ist, und wobei ein Bedienhebel vorgesehen ist, der auf der vom Beschlag abgewandten Seite des Adapters an diesem form- und/oder kraftschlüssig angeordnet ist. Der Adapter und der Bedienhebel weisen zueinander korrespondierende, insbesondere ineinander greifende und drehfest miteinander verbundene, Profile auf, sodass der Adapter und der Beschlag mittels einer lösbaren Verbindung drehfest miteinander gekoppelt sind.

Hierzu ist in einer Weiterbildung der Erfindung vorgesehen, dass der Adapter mindestens einen radial abstehenden Anschlag aufweist, in den mindestens ein korrespondierendes beschlagseitiges Anschlagelement des Beschlags eingreift. Dadurch ist der Adapter drehfest mit dem Beschlag verbunden. Der Adapter mit dem radial abstehenden und integrierten Anschlag weist somit gegenüber herkömmlichen separaten Anschlägen eine vergrößerte Kontakt- und Kraftaufnahmefläche auf, wodurch dieser bei übermäßig größerer mechanischer Beanspruchung, beispielsweise im Fall eines Missbrauchs bei Betätigung, größere Drehmomente, beispielsweise von größer 50 Nm, insbesondere von 70 Nm aufnehmen kann.

Der Adapter und der Bedienhebel sind zusätzlich durch ein Befestigungsmittel drehfest miteinander gekoppelt. Somit wird bei einer Betätigung des Bedienhebels zur Lehnenverstellung der Entriegelungsmechanismus des Beschlags ausgelöst.

Die Erfindung bildet sich weiter dadurch aus, dass die Profile als oberflächenseitig abstehende Rippen, Stege und/oder Zahnungen ausgebildet sind. Dadurch wird die Drehfestigkeit zwischen dem Adapter und dem Bedienhebel gebildet.

Eine weitere Ausführung des Lehnenverstellers sieht vor, dass der Adapter und der Bedienhebel jeweils mindestens ein als eine Schnapp- und/oder Steck- und/oder Rastverbindung ausgebildetes Befestigungselement aufweisen. Somit sind die beiden Elemente formschlüssig miteinander verbunden.

Eine Weiterbildung der Erfindung sieht vor, dass der Adapter und die Übertragungsstange lösbar miteinander verbunden sind. Die beiden Elemente können dadurch einfach montiert und/oder demontiert werden.

Weiterhin sieht eine Ausführungsvariante des Lehnenverstellers vor, dass der Adapter mit dem Beschlag formschlüssig und drehfest, insbesondere mittels einer Schnapp- und/oder Steck- und/oder Rastverbindung, verbunden ist. Dadurch wird der Entriegelungsmechanismus des Lehnenverstellers durch den Betätigungshebel ermöglicht.

Eine weitere Gestaltung des Lehnenverstellers zeigt, dass ein Rückstellelement vorgesehen ist, das als ein Federelement mit einem ersten Federende, das mit dem Adapter verbunden ist, und mit einem zweiten Federende, das mit dem Beschlag verbunden ist, ausgebildet ist. Somit wird zwischen dem Adapter und dem Beschlag nach der Betätigung des Bedienhebels stets eigenständig die gleiche Ausgangsposition eingenommen.

In einer Weiterbildung der Erfindung ist vorgesehen, dass ein zweites Beschlagelement angeordnet ist, bestehend aus einem Beschlagoberteil, einem Beschlagunterteil und einem dazwischen angeordneten Beschlag, der durch eine Übertragungsstange mit dem Beschlag lösbar und drehbar verbunden ist. Dadurch wird eine gleichzeitige Entriegelung des Verriegelungsmechanismus durch einen Betätigungshebel ermöglicht.

Eine Ausgestaltung der Erfindung sieht vor, dass der Beschlag als Dreh- und/oder Rastbeschlag ausgebildet ist. Damit sind verschiedene Komfort- oder Gebrauchsstellungen der Sitzlehne bzw. ein erleichterter Einstieg in einen Fondbereich eines Fahrzeuges möglich.

Ausführungsbeispiele der Erfindung werden nachfolgend anhand von schematischen Figuren näher erläutert. Dabei zeigen:
- Figur 1: schematisch in Explosionsdarstellung ein Ausführungsbeispiel für einen Lehnenversteller für einen nicht näher dargestellten Fahrzeugsitz,
- Figur 2: schematisch den Lehnenversteller im zusammengebauten Zustand mit Adapter, Bedienhebel und Befestigungsmittel,
- Figur 3: schematisch in perspektivischer Ansicht von innen einen Bedienhebel, der außen an einem Adapter gemäß Figur 4 angeordnet ist,
- Figur 4A, 4B: schematisch in perspektivischer Ansicht von außen zwei Ausführungsbeispiele für einen Adapter, der außen an einem Beschlag des Lehnenverstellers angeordnet ist,
- Figur 5: schematisch in Draufsicht von außen den Adapter gemäß Figur 4B,
- Figur 6: schematisch in Draufsicht von innen den Adapter gemäß Figur 4B,
- Figur 7: schematisch ein Ausführungsbeispiel für einen zusammengebauten Lehnenversteller in Draufsicht auf den Bedienhebel,
- Figur 8: schematisch ein Ausführungsbeispiel für einen zusammengebauten Lehnenversteller in Draufsicht auf der Hebelseite ohne Bedienhebel und Befestigungsmittel, und
- Figur 9: schematisch in vergrößerter Darstellung ein sitzteilseitiges Anschlagelement und ein korrespondierender adapterseitiger Anschlag.

Einander entsprechende Teile sind in allen Figuren mit den gleichen Bezugszeichen versehen.

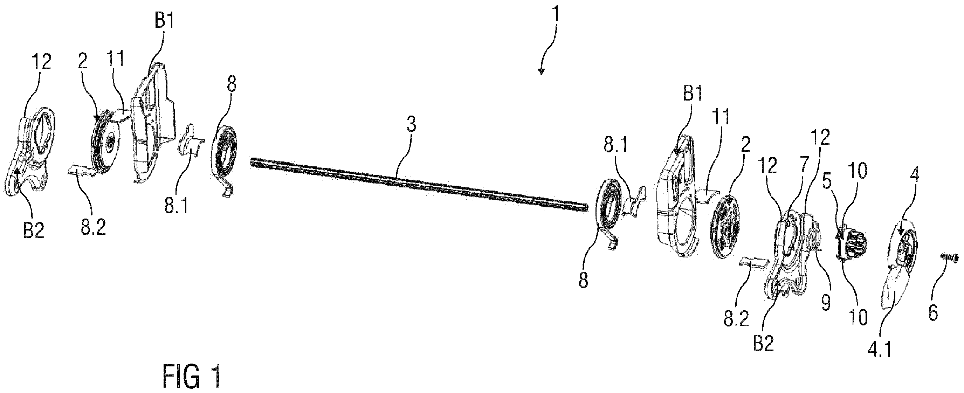

Die Figur 1 zeigt schematisch einen manuell betätigbaren Lehnenversteller 1 für einen nicht näher dargestellten Fahrzeugsitz.

Der nicht näher dargestellte Fahrzeugsitz umfasst üblicherweise ein Sitzteil und eine schwenkbar an diesem anordenbare Sitzlehne als Sitzkomponenten.

Der Lehnenversteller 1 umfasst auf beiden Außenseiten zwei als Dreh- oder Rastbeschläge ausgebildete Beschläge 2 für eine lösbare Verriegelung und Neigungsverstellung und gegebenenfalls ein Freischwenken der Sitzlehne relativ zum Sitzteil. Die beiden Beschläge 2 sind mittels einer Übertragungsstange 3 miteinander drehbar gekoppelt.

Zur Entriegelung des Beschlags 2 und zur Neigungsverstellung der Sitzlehne relativ zum Sitzteil umfasst der Lehnenversteller 1 einen Bedienhebel 4, der außen auf einer der Beschlagseiten des Lehnenverstellers 1 an einem der Beschläge 2 mittels eines Adapters 5 angeordnet ist und den betreffenden Beschlag 2 entriegelt und über diesen die Übertragungsstange 3 antreibt und damit den gegenüberliegenden Beschlag 2 entriegelt und antreibt.

Beidseitig des Fahrzeugsitzes sind jeweils ein erstes Beschlagteil B1 und ein zweites Beschlagteil B2 angeordnet. Zwischen den Beschlagteilen B1 und B2 ist auf jeder Außenseite des Fahrzeugsitzes einer der Beschläge 2 angeordnet. Das erste Beschlagteil B1 ist beispielsweise fest mit der Struktur der Sitzlehne verbunden und somit lehnenfest (auch Beschlagoberteil oder lehnenfestes Beschlagteil genannt). Das zweite Beschlagteil B2 ist fest mit der Struktur des Sitzteils verbunden und somit sitzteilfest (auch Beschlagunterteil oder sitzteilfestes Beschlagteil genannt). Die Zuordnungen der Beschlagteile B1 und B2 können auch vertauscht sein, d.h. das erste Beschlagteil B1 ist sitzteilfest und das zweite Beschlagteil B2 ist lehnenfest.

Zur Betätigung, insbesondere Ver- und Entriegelung, des Beschlags 2 ist der Bedienhebel 4 auf einer der Außenseiten des Fahrzeugsitzes mittels eines Befestigungsmittels 6, insbesondere einer Schraube, wie einer Kunststoffschraube, am Adapter 5 form- und/oder kraftschlüssig befestigt.

Der Bedienhebel 4 ist dabei derart ausgebildet, dass dieser bei Betätigung mittels des Adapters 5 die Übertragungsstange 3 dreht, so dass der auf der gleichen Außenseite angeordnete Beschlag 2 und der auf der gegenüberliegenden Außenseite des Fahrzeugsitzes angeordnete Beschlag 2 betätigt und dadurch optional geöffnet werden.

Der Bedienhebel 4 umfasst ein Hebelelement 4.1. Das Hebelelement 4.1 ist zwischen einer ersten Stellung, in welcher der Beschlag 2 verriegelt ist, und einer zweiten Stellung, in welcher der Beschlag 2 geöffnet ist, verstellbar.

Aufgrund der geöffneten Beschläge 2 der Sitzlehne in der zweiten Stellung des Hebelelements 4.1 kann die Sitzlehne manuell geschwenkt werden. Ist das Hebelelement 4.1 in der ersten Stellung, sind die Beschläge 2 verriegelt und die Sitzlehne in einer entsprechend manuell eingestellten Position arretiert.

Der Lehnenversteller 1 umfasst des Weiteren ein Anschlagelement 7, das Teil des sitzteil- oder karosserieseitigen Beschlagteils B2 ist oder mit diesem Beschlagteil B2 fest verbunden, z. B. geschweißt, ist. Das Anschlagelement 7 ist in Form einer vom zweiten Beschlagteil B2 abragenden Lasche ausgeführt. Dabei ragt das Anschlagelement 7 vom zweiten Beschlagteil B2 in Richtung des Adapters 5 ab. Das Anschlagelement 7 dient zusätzlich der Begrenzung der Schwenkung des Bedienhebels 4.

Der Adapter 5 ist drehfest mit der Übertragungsstange 3 gekoppelt, so dass die Drehbewegung des Bedienhebels 4 über den Adapter 5 und über diesen auf die Übertragungsstange 3 und den gegenüberliegenden Beschlag 2 übertragen wird.

Hierbei weist der Adapter 5 und der Bedienhebel 4 zueinander korrespondierende, insbesondere ineinander greifende Profile oder Strukturen, insbesondere oberflächenseitig abstehende Rippen, Stege und/oder Zahnungen, auf. Der Adapter 5 und der Beschlag 2 sind mittels einer lösbaren Verbindung, insbesondere einer Schnapp- und/oder Steck- und/oder Rastverbindung drehfest miteinander gekoppelt. Zusätzlich sind der Adapter 5 und die Übertragungsstange 3 lösbar formschlüssig miteinander gekoppelt, insbesondere mittels einer Schnapp- und/oder Steck- und/oder Rastverbindung.

Zusätzlich zu den insbesondere axial abstehenden rippen-, zahn- und/oder stegförmigen Profilen/Strukturen zur drehfesten Kopplung von Adapter 5 und Bedienhebel 4 kann der Adapter 5 zumindest ein oder zwei radial abstehende Anschläge 10, beispielsweise in Form von kreissegmentartigen Fahnen oder Verlängerungen, aufweisen, in den oder in die ein bzw. mehrere korrespondierende beschlagseitige Anschlagelemente 7, beispielsweise in Form von einer oder mehreren Laschen, des sitzteilfesten Beschlagsteils B2 eingreifen zur Begrenzung der Drehung des Adapters 5 und damit der Drehung des Bedienhebels 4 relativ zum Sitzteil.

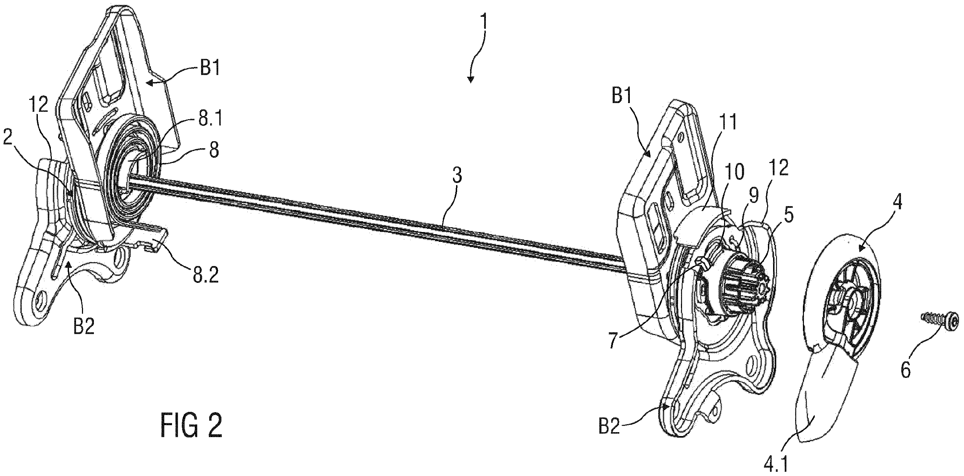

In einer möglichen Ausführungsform, wie in Figuren 1 und 2 dargestellt, umfasst der Lehnenversteller 1 je Beschlag 2 eine Rückstellfeder 8. Die beiden Rückstellfedern 8 sind derart beschlagoberseitig (lehnenfest) und beschlagunterseitig (sitzteil- oder karosseriefest) angelenkt und derart eingerichtet, dass diese bei geöffneten Beschlägen 2 in Fahrtrichtung wirken und die schwenkbare Sitzlehne in eine Klapp- oder Bodenposition stellbar ist.

Beispielsweise sind gemäß Ausführungsbeispiel nach Figuren 1 und 2 eine lehnenfeste Halterung 8.1 als Anlenkungspunkt für ein Ende des Federelements 8 und als Auflage sowie eine beschlagunterseitige Halterung 8.2, die beispielsweise stoffschlüssig angeordnet ist, als gegenüberliegender Anlenkungspunkt für das andere Ende des Federelements 8 vorgesehen.

Des Weiteren ist ein Begrenzungsanschlag 11 zur Begrenzung des Verstellweges des ersten Beschlagteils B1 bei Neigungsverstellung der Sitzlehne des Sitzes vorhanden. Dabei weist das zweite Beschlagteil B2 korrespondierend zum Begrenzungsanschlag 11 Gegenanschläge 12 auf.

Des Weiteren umfasst der Lehnenversteller 1 für den Adapter 5 ein zugehöriges Rückstellelement 9, insbesondere eine Feder. Das Rückstellelement 9 stellt insbesondere unabhängig vom Verriegelungszustand des hebelseitigen Beschlages 2 den Adapter 5 in seine Ausgangslage zurück, wodurch der hebelseitige Beschlag 2 klapperfrei verriegelt ist.

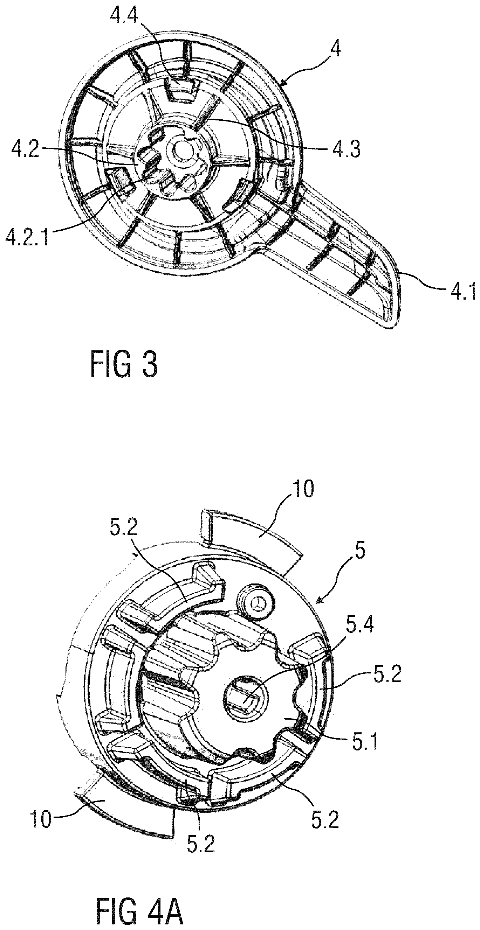

Figur 3 zeigt eine dem Adapter 5 zugewandte Innenseite des Bedienhebels 4 in perspektivischer Ansicht.

Der Bedienhebel 4 weist zwei Bereiche auf, wobei in einem ersten Bereich die Hebelachse angeordnet ist, um die der Bedienhebel 4 eine Schwenkbewegung durchführen kann. Dieser erste Bereich weist im Wesentlichen eine Kreisform auf. Die Hebelachse befindet sich in der Mitte des ersten Bereichs in der im vorliegenden Ausführungsbeispiel dargestellten Durchgangsöffnung, durch welche die Übertragungsstange 3 hindurch im zusammengebauten Zustand des Lehnenverstellers 1 angeordnet ist. Ein zweiter Bereich wird mittels des zuvor beschriebenen Hebelelements 4.1 gebildet.

Die Innenseite des Bedienhebels 4 weist eine die Durchgangsöffnung des Bedienhebels 4 in einem bestimmten Abstand umschließende erste Ausformung 4.2 auf, welche axial in Richtung des Adapters 5 von der Innenseite abragt und die eine Aussparung 4.2.1 aufweist. Die Aussparung 4.2.1 ist dabei mit der Durchgangsöffnung verbunden und weist im Wesentlichen ein sternförmiges, kronenförmiges, zahnkranzförmiges oder thoraxförmiges (beispielsweise rippenförmiges) Profil auf. D. h. das Profil weist über den Umfang verteilt eine Anzahl von Senken und eine Anzahl von Vorsprüngen auf, wobei mindestens eine der Senken gegenüber den anderen Senken vergrößerte Abmessungen, insbesondere einen größeren Durchmesser und/oder eine größere Breite/Höhe/Tiefe aufweist.

Die Aussparung 4.2.1 ist dabei zu einer an dem Adapter 5 angeordneten, zweiten Ausformung 5.1 korrespondierend zur kraft- und formschlüssigen Kopplung beider Ausformungen 5.1, 4.2. und somit von Adapter 5 und Bedienhebel 4 ausgebildet.

An der ersten Ausformung 4.2 sind acht radial abragende Rippen 4.3 angeordnet, die in Umfangsrichtung voneinander beabstandet sind und die zwischen an dem Adapter 5 angeordnete, axial abragende, Kreissegmente 5.2 kraft- und formschlüssig eingreifen, wodurch eine mechanische Stabilität zur Drehmomentaufnahme beim Schwenken des Bedienhebels 4 auf den Adapter 5 sichergestellt ist. In einer nicht näher dargestellten Version kann die Anzahl der radial abragenden Rippen abweichen.

Die Innenseite des Bedienhebels 4 weist zudem drei erste Klippselemente 4.4 auf, die jeweils zwischen zwei Rippen 4.3 angeordnet sind.

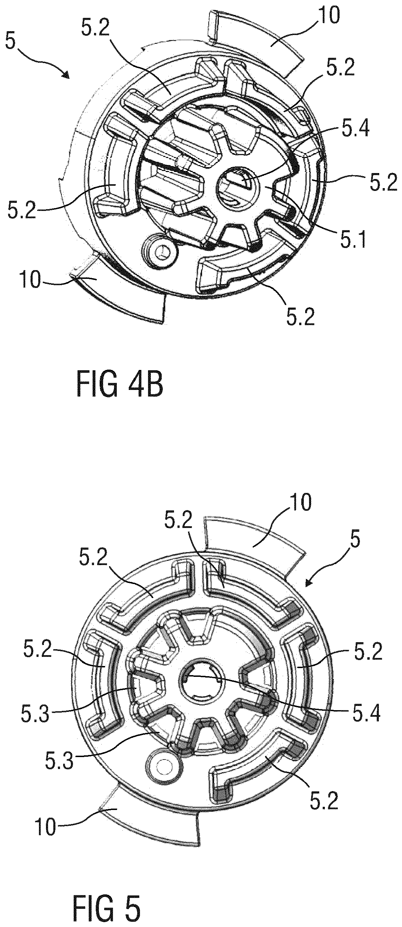

Die Figuren 4A und 4B zeigen in perspektivischer Ansicht von außen zwei Ausführungsbeispiele für einen Adapter 5.

Der Adapter 5 weist in beiden Ausführungsbeispielen die zuvor beschriebene zweite Ausformung 5.1 und die Kreissegmente 5.2 auf, wobei die Kreissegmente 5.2 um die zweite Ausformung 5.1 herum angeordnet sind und im Wesentlichen eine U-Form aufweisen. Zudem weist der Adapter 5 eine Anzahl von zweiten Klippselementen 5.3 und ein Aufnahmeelement 5.4 auf, die in Figur 5 näher dargestellt sind.

Beispielsweise ist das Aufnahmeelement 5.4 als eine Materialanhäufung ausgebildet, in welche sich das Befestigungsmittel 6, insbesondere eine Schraube, form- und/oder kraftschlüssig bei der Montage von Adapter 5 und Bedienhebel 4 einfügt.

Alternativ kann das Aufnahmeelement 5.4 in einer nicht dargestellten Ausführungsform als ein Klippselement ausgebildet sein. In diesem Fall ist das Befestigungsmittel 6 als ein Raststecker oder ein ähnliches Element ausgebildet.

Die zweite Ausformung 5.1 weist eine mit der in dem Bedienhebel 4 angeordneten Aussparung 4.2.1 korrespondierende Form, insbesondere Sternform mit einer Anzahl von Senken und Vorsprüngen auf.

Die Senken sind in einem in Figur 4A gezeigten ersten Ausführungsbeispiel flacher ausgebildet als in einem in Figur 4B gezeigten zweiten Ausführungsbeispiel. Der Adapter 5 gemäß Figur 4B mit den tieferen Senken schafft Raum (wie in Figur 5 in Draufsicht zu sehen) für einen Schieber, um die Rast- bzw. Schnappverbindung und somit die zweiten Klippselemente 5.3 lösen zu können (aufklippsen).

Figur 5 zeigt den Adapter 5 schematisch in Draufsicht von außen gemäß Figur 4B.

Die zweiten Klippselemente 5.3 sind jeweils zwischen zwei Vorsprüngen der zweiten Ausformung angeordnet und somit in Umfangsrichtung voneinander beabstandet. Die zweiten Klippselemente 5.3 dienen der drehfesten Kopplung, insbesondere axialen Verbindung, von Adapter 5 und Beschlag 2.

Das Aufnahmeelement 5.4 ist an einem inneren Umfang einer in der zweiten Ausformung 5.1 eingebrachten Durchgangsöffnung angeordnet, welche im zusammengebauten Zustand des Lehnenverstellers 1 mit der Hebelachse fluchtend angeordnet und in Umfangsrichtung der Durchgangsöffnung voneinander beabstandet sind. Das vorliegende Ausführungsbeispiel zeigt drei Aufnahmeelemente 5.4 (alternativ drei dritte Klippselemente). Die Aufnahmeelemente 5.4 oder dritten Klippselemente dienen derform- und/oder kraftschlüssigen und drehfesten Kopplung von Adapter 5 und Bedienhebel 4.

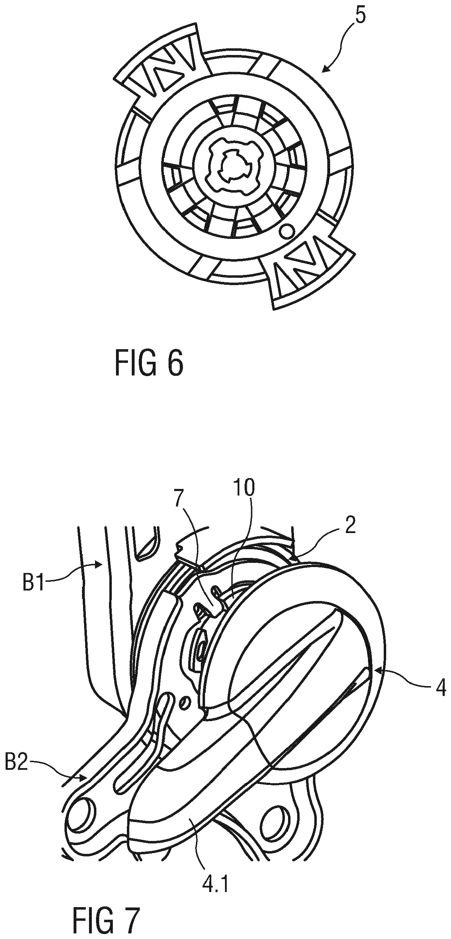

Figur 6 zeigt den Adapter 5 von innen in Draufsicht gemäß Figur 4B.

Figur 7 zeigt schematisch ein Ausführungsbeispiel für einen zusammengebauten Lehnenversteller 1 in Draufsicht auf den Bedienhebel 4.

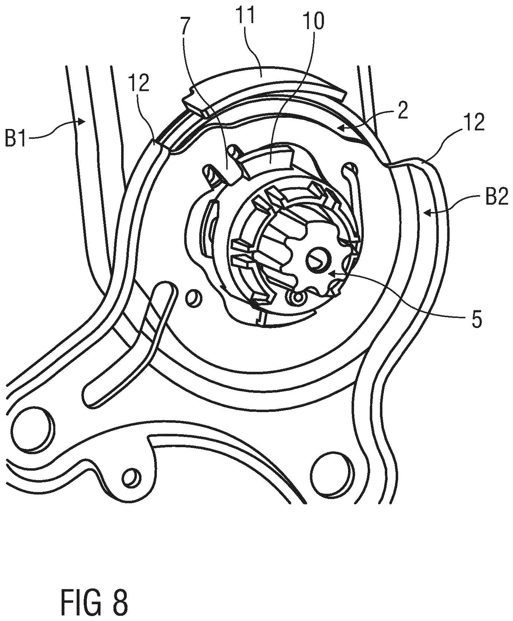

Figur 8 zeigt ein Ausführungsbeispiel für einen zusammengebauten Lehnenversteller 1 in Draufsicht auf der Hebelseite ohne den Bedienhebel 4 mit dem sitzteilseitigen laschenförmigen Anschlagelement 7 und dem korrespondierenden adapterseitigen kreissegmentförmigen Anschlag 10.

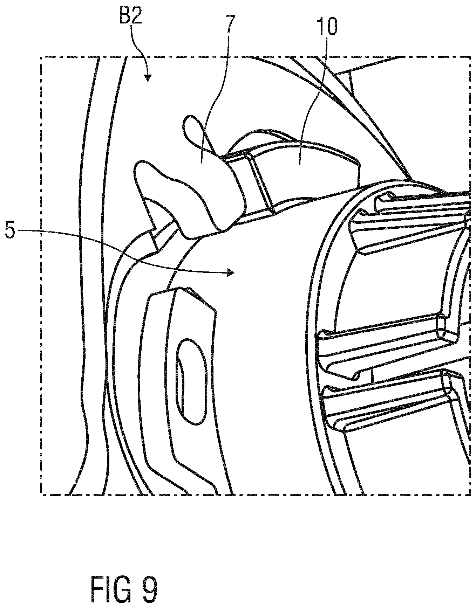

Figur 9 zeigt das Anschlagelement 7 und den zu diesem korrespondierend ausgebildeten Anschlag 10 in vergrößerter Darstellung.

Die am Adapter 5 angeordneten und von diesem radial abstehende Anschläge 10 weisen eine vergrößerte Kontakt- und Kraftaufnahmefläche auf, wodurch dieser bei übermäßig größerer mechanischer Beanspruchung, beispielsweise im Fall eines Missbrauchs bei Betätigung, größere Drehmomente, beispielsweise von größer 50 Nm, insbesondere von 70 Nm aufnehmen können.

Anstelle der im Ausführungsbeispiel nach Figuren 1 und 2 dargestellten spiralförmigen Rückstellfeder 8 für die Sitzlehne kann als Rückstellfeder auch eine nicht näher dargestellte Torsionsstabfeder verwendet werden, welche entsprechend sitzteilfest und lehnenfest am Lehnenversteller 1 angelenkt ist.

### Bezugszeichenliste

- 1: manuell betätigbarer Lehnenversteller
- 2: Beschlag
- B1: erstes Beschlagteil
- B2: zweites Beschlagteil
- 3: Übertragungsstange
- 4: Bedienhebel
- 4.1: Hebelelement
- 4.2: erste Ausformung
- 4.2.1.: Aussparung
- 4.3: Rippen
- 4.4: erste Klippselemente
- 5: Adapter
- 5.1: zweite Ausformung
- 5.2: Kreissegmente
- 5.3: zweite Klippselemente
- 5.4: Aufnahmeelement
- 6: Befestigungsmittel
- 7: Anschlagelement
- 8: Rückstellfeder
- 9: Rückstellelement
- 10: Anschlag
- 11: Begrenzungsanschlag
- 12: Gegenanschlag

## Patentansprüche

1. Lehnenversteller (1) für einen Fahrzeugsitz, mit zumindest einem Beschlagoberteil (B1), einem Beschlagunterteil (B2) und einem dazwischen angeordneten Beschlag (2), wobei an einer vom Beschlag (2) abgewandten Seite des Beschlagoberteils (B1) oder des Beschlagunterteils (B2) ein separater Adapter (5) angeordnet ist, der durch eine Ausnehmung im Beschlagoberteil (B1) bzw. im Beschlagunterteil (B2) am Beschlag (2) fixiert ist, und wobei ein Bedienhebel (4) vorgesehen ist, der auf der vom Beschlag (2) abgewandten Seite des Adapters (5) an diesem form- und/oder kraftschlüssig angeordnet ist, wobei der Adapter (5) und der Bedienhebel (4) zueinander korrespondierende, insbesondere ineinander greifende und drehfest miteinander verbundene Profile aufweisen, sodass der Adapter (5) und der Beschlag (2) mittels einer lösbaren Verbindung drehfest miteinander gekoppelt sind, **dadurch gekennzeichnet, dass** die Innenseite des Bedienhebels (4) eine Durchgangsöffnung mit einer Ausformung (4.2) aufweist, die eine Aussparung (4.2.1) enthält, welche ein sternförmiges, zahnkranzförmiges oder thoraxförmiges Profil aufweist, wobei das Profil über einen Umfang verteilt eine Anzahl von Senken und eine Anzahl von Vorsprüngen aufweist, wobei mindestens eine der Senken gegenüber den anderen Senken vergrößerte Abmessungen aufweist.

2. Lehnenversteller (1) nach Anspruch 1, **dadurch gekennzeichnet, dass** der Adapter (5) mindestens einen radial abstehenden Anschlag (10) aufweist, in den mindestens ein korrespondierendes beschlagseitiges Anschlagelement (7) des Beschlags (2) eingreift.

3. Lehnenversteller (1) nach Anspruch 2, **dadurch gekennzeichnet, dass** die Profile als oberflächenseitig abstehende Rippen (4.3, 5.2), Stege (4.3, 5.2) und/oder Zahnungen (4.2, 4.2.1, 5.1) ausgebildet sind.

4. Lehnenversteller (1) nach einem der vorhergehenden Ansprüche, **dadurch gekennzeichnet, dass** der Adapter (5) und der Bedienhebel (4) jeweils mindestens ein als eine Schnapp- und/oder Steck- und/oder Rastverbindung (4.4, 5.3) ausgebildetes Befestigungselement aufweisen.

5. Lehnenversteller (1) nach einem der vorhergehenden Ansprüche, **dadurch gekennzeichnet, dass** der Adapter (5) und eine zwei Beschläge (2) verbindende Übertragungsstange (3) lösbar miteinander verbunden sind.

6. Lehnenversteller (1) nach einem der vorhergehenden Ansprüche, **dadurch gekennzeichnet, dass** der Adapter (5) mit dem Beschlag (2) form- und/oder kraftschlüssig und drehfest verbunden ist.

7. Lehnenversteller (1) nach einem der vorhergehenden Ansprüche, **dadurch gekennzeichnet, dass** ein Rückstellelement (9) vorgesehen ist, das als ein Federelement mit einem ersten Federende, das mit dem Adapter (5) verbunden ist, und mit einem zweiten Federende, das mit dem Beschlag (2) verbunden ist, ausgebildet ist.

8. Lehnenversteller (1) nach einem der vorhergehenden Ansprüche, **dadurch gekennzeichnet, dass** ein zweites Beschlagelement vorgesehen ist, bestehend aus einem Beschlagoberteil (B1), einem Beschlagunterteil (B2) und einem dazwischen angeordneten Beschlag (2), der durch eine Übertragungsstange (3) mit dem Beschlag (2) lösbar und drehbar verbunden ist.

9. Fahrzeugsitz mit einem Lehnenversteller (1) nach einem der vorhergehenden Ansprüche.

## Claims

1. Backrest adjuster (1) for a vehicle seat, having at least one fitting upper part (B1), a fitting lower part (B2) and a fitting (2) which is arranged therebetween, wherein arranged on a side of the fitting upper part (B1) or the fitting lower part (B2), said side facing away from the fitting (2), is a separate adapter (5) which is fixed to the fitting (2) through a recess in the fitting upper part (B1) or the fitting lower part (B2), and wherein an operating lever (4) is provided which, on that side of the adapter (5) which faces away from the fitting (2), is arranged on said adapter in a form-fitting and/or force-fitting manner, wherein the adapter (5) and the operating lever (4) have mutually corresponding profiles which in particular engage one inside the other and which are connected to one other in a rotationally fixed manner, such that the adapter (5) and the fitting (2) are coupled to one another in a rotationally fixed manner by means of a releasable connection, **characterized in that** the inner side of the operating lever (4) has a passage opening with a formation (4.2) which comprises a cutout (4.2.1) having a star-like, toothed-ring-like or thorax-like profile, wherein the profile has a number of recesses and a number of projections distributed over a periphery, wherein at least one of the recesses has increased dimensions with respect to the other recesses.

2. Backrest adjuster (1) according to Claim 1, **characterized in that** the adapter (5) has at least one radially protruding stop (10) in which at least one corresponding fitting-side stop element (7) of the fitting (2) engages.

3. Backrest adjuster (1) according to Claim 2, **characterized in that** the profiles are configured as ribs (4.3, 5.2), webs (4.3, 5.2) and/or sets of teeth (4.2, 4.2.1, 5.1) which protrude on the surface side.

4. Backrest adjuster (1) according to one of the preceding claims, **characterized in that** the adapter (5) and the operating lever (4) each have at least one securing element which is configured as a snap-fit and/or plug-type and/or latching connection (4.4, 5.3).

5. Backrest adjuster (1) according to one of the preceding claims, **characterized in that** the adapter (5) and a transmission rod (3), which connects two fittings (2), are releasably connected to one other.

6. Backrest adjuster (1) according to one of the preceding claims, **characterized in that** the adapter (5) is connected to the fitting (2) in a form-fitting and/or force-fitting and rotationally fixed manner.

7. Backrest adjuster (1) according to one of the preceding claims, **characterized in that** a restoring element (9) is provided which is configured as a resilient element having a first resilient end which is connected to the adapter (5) and having a second resilient end which is connected to the fitting (2).

8. Backrest adjuster (1) according to one of the preceding claims, **characterized in that** a second fitting element is provided comprising a fitting upper part (B1), a fitting lower part (B2) and a fitting (2) which is arranged therebetween and which is releasably and rotatably connected to the fitting (2) by means of a transmission rod (3).

9. Vehicle seat having a backrest adjuster (1) according to one of the preceding claims.

## Revendications

1. Dispositif de réglage de dossier (1) pour un siège de véhicule, comportant au moins une partie supérieure de ferrure (B1), une partie inférieure de ferrure (B2) et une ferrure (2) disposée entre celles-ci, un adaptateur séparé (5) étant disposé sur un côté de la partie supérieure de ferrure (B1) ou de la partie inférieure de ferrure (B2) opposé à la ferrure (2), lequel adaptateur est fixé à la ferrure (2) à travers une cavité dans la partie supérieure de ferrure (B1) ou dans la partie inférieure de ferrure (B2), et un levier de commande (4) étant prévu, lequel est, sur le côté de l'adaptateur (5) opposé à la ferrure (2), disposé sur celui-ci par complémentarité de forme et/ou à force, l'adaptateur (5) et le levier de commande (4) comprenant des profils correspondant l'un à l'autre, en particulier venant en prise l'un dans l'autre et reliés l'un à l'autre de manière solidaire en rotation, de sorte que l'adaptateur (5) et la ferrure (2) soient accouplés l'un à l'autre de manière solidaire en rotation au moyen d'une liaison libérable, **caractérisé en ce que** le côté intérieur du levier de commande (4) comprend une ouverture traversante dotée d'une formation (4.2) qui contient un évidement (4.2.1), lequel présente un profil en forme d'étoile, en forme de couronne dentée ou en forme de thorax, le profil comprenant, de manière répartie sur une périphérie, un certain nombre de dépressions et un certain nombre de saillies, au moins l'une des dépressions présentant des dimensions accrues par rapport aux autres dépressions.

2. Dispositif de réglage de dossier (1) selon la revendication 1, **caractérisé en ce que** l'adaptateur (5) comprend au moins une butée (10) faisant saillie radialement, dans laquelle vient en prise au moins un élément de butée (7) correspondant, côté ferrure, de la ferrure (2).

3. Dispositif de réglage de dossier (1) selon la revendication 2, **caractérisé en ce que** les profils sont réalisés sous forme d'ailettes (4.3, 5.2), de nervures (4.3, 5.2) et/ou de dentures (4.2, 4.2.1, 5.1).

4. Dispositif de réglage de dossier (1) selon l'une des revendications précédentes, **caractérisé en ce que** l'adaptateur (5) et le levier de commande (4) comprennent respectivement au moins un élément de fixation réalisé sous forme de liaison à déclic et/ou enfichable et/ou par encliquetage (4.4, 5.3).

5. Dispositif de réglage de dossier (1) selon l'une des revendications précédentes, **caractérisé en ce que** l'adaptateur (5) et une tige de transmission (3) reliant deux ferrures (2) sont reliés l'un à l'autre de manière amovible.

6. Dispositif de réglage de dossier (1) selon l'une des revendications précédentes, **caractérisé en ce que** l'adaptateur (5) est relié à la ferrure (2) par complémentarité de forme et/ou à force et de manière solidaire en rotation.

7. Dispositif de réglage de dossier (1) selon l'une des revendications précédentes, **caractérisé en ce qu'**un élément de rappel (9) est prévu, lequel est réalisé sous la forme d'un élément ressort comportant une première extrémité de ressort, qui est reliée à l'adaptateur (5), et comportant une deuxième extrémité de ressort, qui est reliée à la ferrure (2).

8. Dispositif de réglage de dossier (1) selon l'une des revendications précédentes, **caractérisé en ce qu'**un deuxième élément de ferrure est prévu constitué d'une partie supérieure de ferrure (B1), d'une partie inférieure de ferrure (B2) et d'une ferrure (2) disposée entre celles-ci, lequel est relié de manière amovible et rotative à la ferrure (2) au moyen d'une tige de transmission (3).

9. Siège de véhicule comportant un dispositif de réglage de dossier (1) selon l'une des revendications précédentes.
